# EUROPÄISCHE PATENTSCHRIFT

(11) **EP 1 116 358 B1**
(45) Veröffentlichungstag und Bekanntmachung des Hinweises auf die Patenterteilung: **03.09.2003**
(21) Anmeldenummer: 99947298.8
(22) Anmeldetag: 09.09.1999
(51) Int. Cl.: H04L 9/32, G07F 7/10

(54) **VERFAHREN ZUR AUTHENTIFIKATION ZUMINDEST EINES TEILNEHMERS BEI EINEM DATENAUSTAUSCH**
METHOD FOR AUTHENTICATING AT LEAST ONE SUBSCRIBER DURING A DATA EXCHANGE
PROCEDE D'AUTHENTIFICATION D'AU MOINS UN ABONNE LORS D'UN ECHANGE DE DONNEES

(30) Priorität: 22.09.1998 EP 98117939
(43) Veröffentlichungstag der Anmeldung: 18.07.2001
(73) Patentinhaber: Infineon Technologies AG, 81669 München (DE)
(72) Erfinder: POCKRANDT, Wolfgang, D-85293 Reichertshausen (DE)
(74) Vertreter: Hermann, Uwe, Dipl.-Ing.
(86) Internationale Anmeldenummer: EP9906664
(87) Internationale Veröffentlichungsnummer: WO00018061

(56) Entgegenhaltungen:
- WO-A-97/15161
- DE-C- 4 339 460

## Beschreibung

Die Erfindung betrifft ein Verfahren zur Authentifikation zumindest eines Teilnehmers bei einem Datenaustausch zwischen zumindest zwei Teilnehmern, bei dem einem ersten Teilnehmer von einem zweiten Teilnehmer ein erstes Datum übermittelt wird, der erste Teilnehmer dieses erste Datum mittels eines Algorithmus zu einem zweiten Datum verarbeitet und an den zweiten Teilnehmer übermittelt, und der zweite Teilnehmer das zweite Datum auf dessen Richtigkeit überprüft.

Solche Verfahren sind aus der Schrift "Cryptographic Identification Methods for Smart Cards in the Process of Standardization" von Hanns-Peter Königs aus IEEE Communications Magazine, Vol. 29, No. 6, June 1991, pp. 42 - 48 bekannt. Bei dem dortigen Verfahren wird als erstes Datum eine Zufallszahl von einem Schreib/Lese-Terminal zu einer Smartcard gesendet und dort mittels eines geheimen Algorithmus und zumindest einer Geheimzahl verschlüsselt. Das verschlüsselte Ergebnis wird von der Smartcard zum Terminal zurückgesendet und dort entweder entschlüsselt oder ebenfalls in gleicher Weise verschlüsselt. Das jeweilige Ergebnis wird mit der anfänglich gesendeten Zufallszahl beziehungsweise dem empfangenen zweiten Datum verglichen. Ein positives Vergleichsergebnis zeigt an, daß beide Datenaustauschteilnehmer über den richtigen Algorithmus und die richtige Geheimzahle beziehungsweise den richtigen Schlüssel verfügen und damit authentisch sind.

Authentifikationsverfahren werden vor allem dann angewendet, wenn es sich beim Datenaustausch um geldwerte oder sicherheitskritische Vorgänge handelt. Solche Vorgänge sind naturgemäß Angriffen ausgesetzt. Einem Angreifer stellt sich dabei die Aufgabe, die beteiligten Schlüssel, Geheimzahlen und Algorithmen herauszufinden. Aus dem Ablauf der Kommunikation läßt sich auf die Art der verwendeten Authentifikation schließen und der Angriff damit gezielt fahren.

Dokument WO 97 15161 beschreibt ein Authentifikationsverfahren, das im GSM-Mobilfunknetz eingesetzt wird und nach dem Chaitenge-Response-Verfahren arbeitet. Hierzu wird von einem Authentifizierungscenter eine Zufallszahl (Challenge) an eine mobile Einheit gesendet, die diese mit einem in der mobilen Einheit gespeicherten Authentifizierungsschlüssel Ki mittels eine Authentifizierungalgorithmus A3 zu einem Authentifizierungsparameter SRES (Response) verarbeitet. Dieser wir an das Authentifizierungscenter der mobilen Einheit zurückgesendet und auf seine Korrektheit überprüft. Weiters wird zu Authentifizierung der mobilen Einheit ein Schlüssel Kc benötigt. Aus der Beschreibung auf Seite 2, Zeile 22 bis 27 geht jedoch hervor, daß der Schlüssel Kc nicht jedes Mal zusammen mit der Response errechnet wird, sondern im voraus berechnet und in einem Register abgelegt wird. **Hieraus ergibt sich, daß keine gleichzeitige Verarbeitung der Challenge mittels zweier Verarbeitungseinheiten stattfindet.**

Dokument DE 4339460 offenbart ebenfalls ein Authentifizierungsverfahren, welches nach dem Challenge-Response-Verfahren arbeitet. **Es findet aber, während der Berechnung der Response durch die Verarbeitung der Challenge, keine weitere Verarbeitung der Challenge statt.**

Die Aufgabe vorliegender Erfindung ist es, die Art des durchgeführten Authentifikationsverfahrens möglichst gut zu verbergen.

Die Aufgabe wird durch ein Verfahren gemäß Anspruch 1 gelöst. Vorteilhafte Weiterbildungen sind in den Unteransprüchen angegeben.

Durch die gleichzeitige Ausführung zumindest zweier Verarbeitungsvorgänge wird es einem Angreifer deutlich erschwert, aus einer Untersuchung beispielsweise der zeitabhängigen Leistungsaufnahme auf den internen Ablauf der Authentifikation zu schließen.

Die Erfindung wird nachfolgend anhand eines Ausführungsbeispiels mit Hilfe einer Figur näher erläutert.

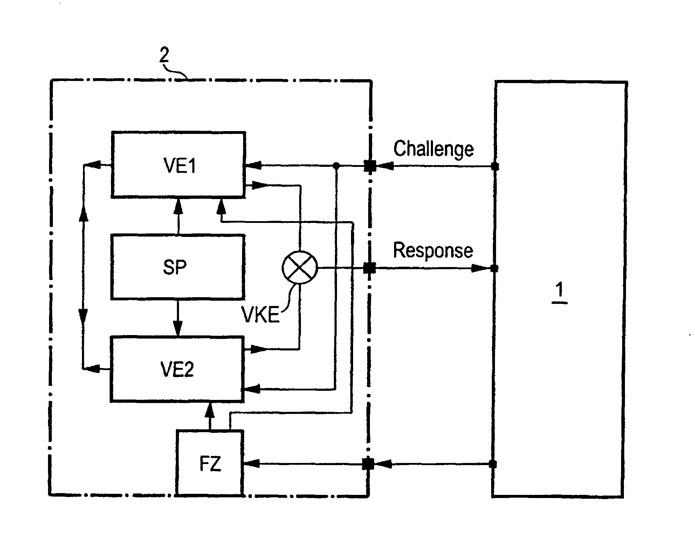

Die prinzipielle Darstellung eines Datenaustauschsystems gemäß Figur 1 zeigt einen ersten Teilnehmer 1, der beispielsweise ein Lese/Schreib-Terminal sein kann und einen zweiten Teilnehmer 2, der im Beispiel eine Smartcard oder Chipkarte sein soll. Beim im folgenden erläuterten Beispiel soll sich der zweite Teilnehmer, also die Karte, gegenüber dem ersten Teilnehmer, dem Terminal authentifizieren. Aus diesem Grund sind nur die nötigen Schaltungseinrichtungen in der Karte dargestellt. Für den Fall, daß sich auch das Terminal 1 gegenüber der Karte 2 authentifizieren soll, müßte auch das Terminal 1 entsprechende Schaltungseinrichtungen aufweisen.

Als erstes sendet das Terminal 1 ein erstes Datum, eine sogenannte Challenge, zur Karte 2. Die Challenge wird in erfindungsgemäßer Weise dort sowohl einer ersten Verarbeitungseinrichtung VE1 als auch einer zweiten Verarbeitungseinrichtung VE2 zugeführt. Zur für die Authentifizierung nötigen Verarbeitung der Challenge werden den Verarbeitungseinrichtungen VE1, VE2 aus einem Speicherbereich SP die nötigen Informationen wie Geheimzahlen oder Schlüssel zugeführt.

Die Verarbeitung selbst kann entweder ein einfacher Vergleich der Challenge mit einem erwarteten, im Speicherbereich SP abgespeicherten Wert sein oder aber eine komplizierte Verschlüsselung beispielsweise entsprechend dem DES- oder dem RSA-Algorithmus. Zu diesem Zweck würden die Verarbeitungseinheiten VE1, VE2 als komplexe Mikroprozessoren mit zugeordneten Krypto-Coprozessoren ausgebildet sein. Häufig verwendet werden hardwaremäßig realisierte Einwegverschlüsselungsvorrichtungen, die beispielsweise mit einem rückgekoppelten Schieberegister gebildet sind.

Die Ausgangsdaten der Verarbeitungseinrichtungen VE1, VE2 werden einer Verknüpfungseinrichtung zugeführt, deren Ausgangssignal als Response an das Terminal 1 weitergeleitet wird. die Verknüpfungseinrichtung VKE muß die Ausgangsdaten der Verarbeitungseinrichtungen VE1, VE2 nicht zwangsläufig mit einander verknüpfen, sondern kann auch nur das Ausgangsdatum der ersten Verarbeitungseinrichtung VE1 unverändert als Response durchlassen und das Ausgangsdatum der zweiten Verarbeitungseinrichtung VE2 sperren, da der wesentliche Aspekt der Erfindung im gleichzeitigen Ablauf zumindest zweier, vorzugsweise unterschiedlicher Verarbeitungsvorgänge ist, um beispielsweise aus der Leistungsaufnahme nicht auf den internen Aufbau und die zugehörigen Daten schließen zu können.

Es ist jedoch von Vorteil, wenn die Ausgangsdaten der Verarbeitungseinrichtungen VE1, VE2 beispielsweise mittels eines die Verknüpfungseinrichtung VKE realisierenden EXOR-Gatters miteinander verknüpft werden.

Das Blockschaltbild der Figur zeigt auch die erfindungsgemäß weiterbildende Verknüpfung der beiden Verarbeitungseinheiten VE1, VE2. Verknüpfung heißt hier das Zwischen- oder Endergebnisse der Datenverarbeitung in einer Verarbeitungseinheit in die Verarbeitung der jeweils anderen Verarbeitungseinheit einbezogen wird. Dabei können in einer ersten Weiterbildung der Erfindung Ausgangsdaten nur einer Verarbeitungseinheit in der anderen berücksichtigt werden und in einer weiteren Weiterbildung Ausgangsdaten beider Verarbeitungseinheiten in der jeweils anderen berücksichtigt werden.

Wie bereits in der Beschreibungseinleitung ausgeführt wurde, kann die Richtigkeit der Response im Terminal 1 auf verschiedene Weise überprüft werden. Hierzu sind einige Möglichkeiten in der bereits genannten Schrift ausführlich dargestellt und erläutert und aus diesem Grund in der Figur nicht näher ausgeführt.

In einer weiteren Ausbildung der Erfindung ist ein Fehlerzähler FZ vorgesehen, der die Anzahl der negativen Vergleichsergebnisse festhält und bei einer bestimmten voreingestellten Anzahl die Verarbeitungseinrichtungen VE1, VE2 sperrt, so daß keine weitere Authentifizierung und damit kein weiterer Datenaustausch zwischen dem Terminal 1 und der Karte 2 stattfinden kann. Hierdurch wird erreicht, daß keine beliebige Anzahl von Versuchen zur Untersuchung des Authentifikationsvorgangs durchgeführt werden kann.

## Patentansprüche

1. Verfahren zur Authentifikation zumindest eines Systemteils durch ein anderes Systemteil (1, 2) bei einem aus einer Chipkarte und einem Schreib-/Leseterminal gebildeten Informationsübertragungssystem, bei dem von dem einen Systemteil (1) dem anderen Systemteil (2) eine Challenge übermittelt wird, das andere Systemteil (2) diese Challenge mittels eines ersten Algorithmus zu einer Response verarbeitet und an den einen Systemteil (1) übermittelt und dieser die Response auf dessen Ergebnis überprüft,
**dadurch gekennzeichnet, daß**
während der Berechnung der Response mittels des ersten Algorithmus durch Verarbeitung der Challenge zumindest eine weitere Verarbeitung der Challenge stattfindet.

2. Verfahren nach Anspruch 1,
**dadurch gekennzeichnet, daß**
die weitere Verarbeitung mittels eines zweiten Algorithmus erfolgt.

3. Verfahren nach Anspruch 1,
**dadurch gekennzeichnet, daß**
die weitere Verarbeitung ein Vergleich der Challenge mit einer vorgegebenen Zufallszahl ist.

4. Verfahren nach einem der vorhergehenden Ansprüche,
**dadurch gekennzeichnet, daß**
die Ergebnisse der beiden Verarbeitungen zur Response miteinander verknüpft werden.

5. Verfahren nach einem der vorhergehenden. Ansprüche,
**dadurch gekennzeichnet, daß**
das End- oder ein Zwischenergebnis der weiteren Verarbeitung der Challenge zur Verarbeitung der Challenge mittels des ersten Algorithmus herangezogen wird.

6. Verfahren nach einem der vorhergehenden Ansprüche,
**dadurch gekennzeichnet, daß**
das End- oder ein Zwischenergebnis der Verarbeitung der Challenge mittels des ersten Algorithmus zur weiteren Verarbeitung der Challenge herangezogen wird.

7. Verfahren nach einem der vorhergehenden Ansprüche,
**dadurch gekennzeichnet, daß**
die Anzahl der Verarbeitungsvorgänge durch einen Fehlerzähler (FZ) begrenzt ist.

## Claims

1. Method for authenticating at least one system part using another system part (1, 2) in an information transmission system formed from a smart card and a read/write terminal, in which one system part (1) transmits a challenge to the other system part (2), the other system part (2) processes this challenge using a first algorithm to give a response and transmits it to the first system part (1), and the latter checks the response for its result,
**characterized in that**,
during calculation of the response by processing the challenge using the first algorithm, at least one other processing operation on the challenge is carried out.

2. Method according to Claim 1,
**characterized in that**
the other processing operation is carried out using a second algorithm.

3. Method according to Claim 1,
**characterized in that**
the other processing operation is a comparison between the challenge and a prescribed random number.

4. Method according to one of the preceding claims,
**characterized in that**
the results of the two processing operations are logically combined with one another to give the response.

5. Method according to one of the preceding claims,
**characterized in that**
the final result or an intermediate result of the other processing operation on the challenge is used to process the challenge using the first algorithm.

6. Method according to one of the preceding claims,
**characterized in that**
the final result or an intermediate result of the processing operation on the challenge using the first algorithm is used for the other processing operation on the challenge.

7. Method according to one of the preceding claims,
**characterized in that**
the number of processing procedures is limited by an error counter (FZ).

## Revendications

1. Procédé d'authentification d'au moins une partie de système par une autre partie de système (1, 2) dans un système de transmission d'informations constitué par une carte à puce et un terminal d'écriture-lecture, dans lequel une interrogation est transmise d'une partie (1) de système à l'autre partie (2) de système, l'autre partie (2) de système traitant cette information au moyen d'un premier algorithme pour obtenir une réponse qu'elle transmet à la première partie (1) de système qui vérifie le résultat de la réponse, **caractérisé en ce qu'**un autre traitement de la réponse est effectué pendant le calcul de la réponse au moyen du premier algorithme en traitant la réponse.

2. Procédé selon la revendication 1, **caractérisé en ce que** l'autre traitement est effectué au moyen d'un deuxième algorithme.

3. Procédé selon la revendication 1, **caractérisé en ce que** l'autre traitement est une comparaison de la réponse avec un nombre aléatoire prédéterminé.

4. Procédé selon l'une des revendications précédentes, **caractérisé en ce que** les résultats des deux traitements peuvent être combinés pour obtenir la réponse.

5. Procédé selon l'une des revendications précédentes, **caractérisé en ce que** le résultat final ou un résultat intermédiaire de l'autre traitement de la réponse est utilisé pour traiter la réponse au moyen du premier algorithme.

6. Procédé selon l'une des revendications précédentes, **caractérisé en ce que** le résultat final ou un résultat intermédiaire du traitement de la réponse au moyen du premier algorithme est utilisé pour l'autre traitement de la réponse.

7. Procédé selon l'une des revendications précédentes, **caractérisé en ce que** le nombre de processus de traitement est limité par un compteur d'erreurs (FZ).
